# EUROPÄISCHE PATENTANMELDUNG

(11) **EP 1 348 797 A1**
(43) Veröffentlichungstag der Anmeldung: **01.10.2003**
(21) Anmeldenummer: 02027468.4
(22) Anmeldetag: 10.12.2002
(51) Int. Cl.: D06H 7/00, B26F 1/02

(54) **Gewebe und Verfahren zu seiner Herstellung**

(30) Priorität: 01.02.2002 DE 10204148
(71) Anmelder: Schmitz-Werke GmbH + Co. KG, 48282 Emsdetten (DE)
(72) Erfinder: Schmitz, Justus, 48282 Emsdetten (DE)
(74) Vertreter: Schneck, Herbert, Dipl.-Phys., Dr.

(57) **Zusammenfassung**

Bei einem mit Durchbrechungen versehenen Gewebe ist vorgesehen, dass die Durchbrechungen (1) nachträglich durch Perforation unter Durchtrennung der Gewebefäden, z.B. durch Stanzen oder Laserschweißen der Gewebefäden, z.B. durch Nadeln, und erforderlichenfalls Stabilisierung der durchtrennten oder verdrängten Gewebefäden hergestellt sind.

## Beschreibung

Die Erfindung richtet sich auf ein mit Durchbrechungen versehenes Gewebe und ein Verfahren zu seiner Herstellung.

Mit Durchbrechungen versehene Gewebe sind beispielsweise in Form von Gardinenstoffen bekannt. Die entsprechenden Durchbrechungen werden bereits bei der Herstellung des Stoffes, also beim Weben, ausgebildet. Stoffe dieser Art, wie also beispielsweise Gardinenstoffe, dienen zum Einsatz in Innenräumen und würden sich aufgrund ihrer Haltbarkeitseigenschaften nicht zur Verwendung im Außenbereich eignen.

Wetterfeste, für den Außenbereich bestimmte Stoffe sind herkömmlicherweise nicht mit Durchbrechungen versehen und erreichen eine gewisse Transparenz allenfalls dadurch, dass das Gewebe eine vergleichsweise grobe Webart aufweist oder die verwendeten Garne in beschränktem Umfang transparent sind.

Aus der DE 1 535 440 A und der DE 28 34 873 A1 ist es bekannt, in ein Gewebe nach dem Weben Durchbrechungen einzubringen, indem die Schuss- und/oder Kettfäden verschoben werden, zum Beispiel indem man Nadeln oder Dorne in gewünschten Abständen ohne Beschädigung der Gewebefäden in die Gewebebahn eintreten lässt.

Aus der DE 2 040 002 A ist eine Vorrichtung zum Stanzen von gestapelten Textillagen bekannt, das heißt es geht um die Formgebung der Außenkontur.

Der Erfindung liegt die Aufgabe zugrunde, ein stabiles, wetterfestes Gewebe zur Verwendung für Wintergarten-Schattierungen, Vertikalmarkisen, Fenstermarkisen und dergleichen zu schaffen, wodurch einfallendes Sonnenlicht in seiner Intensität in vorgebbarem Umfang reduziert wird, welches andererseits aber eine für das menschliche Wohlbefinden förderliche Transparenz aufweist.

Diese Aufgabe wird erfindungsgemäß dadurch gelöst, dass die Unterbrechungen nachträglich durch Perforation unter Durchtrennung der Gewebefäden und erforderlichenfalls Stabilisierung der durchtrennten oder verdrängten Gewebefäden hergestellt sind. Bei einem solchen Gewebe ist es unabhängig von der Ausgestaltung und der Geometrie des Gewebes als solchem möglich, Durchbrechungen von nahezu beliebiger Größe, Dichte und Geometrie beziehungsweise Struktur einzubringen.

Wenn die Durchbrechungen durch Stanzen hergestellt sind, kann man durch Erwärmung und geeignete Wahl der Stanznadelgeometrie erreichen, dass aufgrund des Drucks und der entstehenden Temperatur beim Stanzen die Garne an der Stanzkante anschmelzen beziehungsweise zusammensintern. Es wird hierdurch also eine praktisch selbsttätige Stabilisierung der durch Stanzen erzeugten Perforationen in deren Randbereich erzielt. Dies gilt insbesondere im Falle des Einsatzes synthetischer Garne wie Polyester, Polypropylen, Polyethylen, Polyamid, Polyvinylchlorid oder Polyacryl. Im Falle des Einsatzes beschichteter Ware sind die Durchbrechungen hierdurch zusätzlich mechanisch stabilisiert. Anschmelzen der Durchbrechungs-Kanten sowie Beschichtung erhöhen die Dimensionsstabilität der Durchbrechungen, sind aber häufig nicht zwingend erforderlich.

Die Erfindung richtet sich auch auf ein Verfahren zur Herstellung eines solchen Gewebes, wonach vorgesehen ist, dass das Gewebe zunächst in herkömmlicher Weise durch Weben hergestellt und erst nachträglich mit Perforationen, insbesondere durch Stanzen oder Laserschneiden, versehen wird. Dabei werden vorzugsweise thermoplastische Garne verwendet, um beim Stanzen oder Laserschneiden eine Stabilisierung durch Anschmelzen oder Zusammensintern zu erreichen.

Nachfolgend wird die Erfindung anhand eines bevorzugten Ausführungsbeispiels in Verbindung mit der Zeichnung näher erläutert. Dabei zeigen:
- Fig. 1: eine schematische Darstellung der Herstellung der Durchbrechungen durch Stanzen, und
- Fig. 2: eine schematische Darstellung der Herstellung der Durchbrechungen durch Stanzen und Kantenverschmelzen.

Die Perforationen eines erfindungsgemäßen Gewebes weisen eine runde Konfiguration mit einer Größe zwischen 0,5 und 3 mm auf.

Die Dichte wird so gewählt, dass die freie Querschnittsfläche der Löcher zwischen 1 und 30 % der Gewebeoberfläche ausmacht.

Im Ausführungsbeispiel wird als Gewebe ein spinndüsengefärbtes Polyacrylgarn mit dem Titer Nm 34/2 der Kettdichte 30 Fäden/cm und der Schussdichte 15 Fäden/cm eingesetzt.

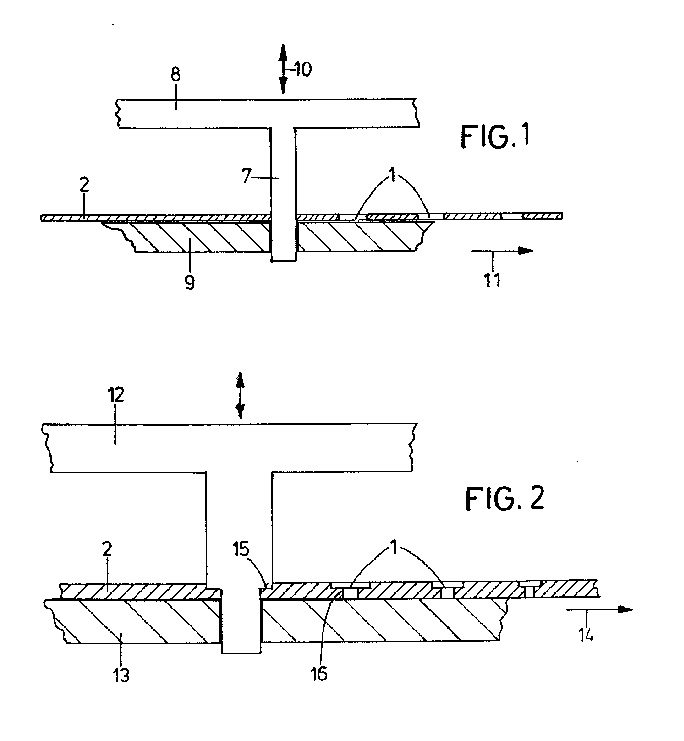

Bei der in Fig. 1 dargestellten Ausführungsform ist ein Stanzwerkzeug 7 umfassend ein Oberteil 8 in Form einer Patrize und ein Unterteil 9 in Form einer Matrize vorgesehen, wobei das Oberteil 8 eine Hub- und Absenkbewebung in Richtung des Pfeils 10 durchführt, sodass bei einem Gewebevorschub in Richtung des Pfeils 11 wiederum Durchbrechungen 1 unter Durchtrennung der Gewebe-Fäden hergestellt werden.

Bei der in Fig. 2 dargestellten Ausführungsform ist wiederum ein Stanzwerkzeug mit einem Oberteil 12 und einem Unterteil 13 vorgesehen, an welchem das Gewebe 2 in Richtung des Pfeils 14 vorbeigeführt wird, wobei das Oberteil 12 im Bereich des Vorderendes des eigentlichen Stanzwerkzeugs eine Ringschulter 15 aufweist, die rund um die Durchbrechungen 1 eine Verdichtungszone 16 erzeugt, wobei zusätzlich zu dieser mechanischen Verdichtung eine Vorwärmung des Gewebes und/oder eine Beheizung des Oberteils 12 vorgesehen ist.

## Patentansprüche

1. Mit Durchbrechungen (1) versehenes Gewebe (2), **dadurch gekennzeichnet, dass** die Durchbrechungen (1) nachträglich durch Perforation unter Durchtrennung der Gewebefäden durch Stanzen oder Laserschweißen und erforderlichenfalls Stabilisierung der durchtrennten oder verdrängten Gewebefäden hergestellt sind.

2. Gewebe (2) nach Anspruch 1, **dadurch gekennzeichnet, dass** die Durchbrechungen (1) durch Stanzen hergestellt sind, wobei die Garne so ausgewählt sind, dass aufgrund des Drucks und der Temperatur beim Stanzen diese an der Stanzkante anschmelzen beziehungsweise zusammensintern.

3. Verfahren zur Herstellung eines Durchbrechungen (1) aufweisenden Gewebes (2), **dadurch gekennzeichnet, dass** das Gewebe (2) in herkömmlicher Weise durch Weben hergestellt und erst nachträglich mit Perforationen versehen wird.

4. Verfahren nach Anspruch 3, **dadurch gekennzeichnet, dass** die Perforationen durch Stanzen oder Laserschneiden hergestellt werden.

5. Verfahren nach Anspruch 4, **dadurch gekennzeichnet, dass** beim Stanzen oder Laserschneiden die eingebrachten Perforationen durch Anschmelzen oder Zusammensintern der durchtrennten Garne stabilisiert werden.
